# EUROPEAN PATENT SPECIFICATION

(11) **EP 3 919 308 B1**
(45) Date of publication and mention of the grant of the patent: **26.04.2023**
(21) Application number: 20716557.2
(22) Date of filing: 22.01.2020
(51) Int. Cl.: B60K 37/06, B60W 30/14, B60W 30/16, B60K 28/06

(54) **ADVANCED DRIVER ASSISTANCE SYSTEM AND MANIPULATION ASSEMBLY THEREOF**
VERBESSERTES FAHRERASSISTENZSYSTEM UND MANIPULATIONSANORDNUNG DAFÜR
SYSTÈME AVANCÉ D'AIDE À LA CONDUITE ET ENSEMBLE DE MANIPULATION ASSOCIÉ

(30) Priority: 28.01.2019 CN 201920146827 U
(43) Date of publication of application: 08.12.2021
(73) Proprietor: VOLKSWAGEN AKTIENGESELLSCHAFT, 38440 Wolfsburg (DE)
(72) Inventor: ZHU, Duan, Beijing 100027 (CN); CHERUBINI, Matthieu, Beijing 100027 (CN)
(86) International application number: PCT/IB2020/000008
(87) International publication number: WO 2020/165643

(56) References cited:
- DE-A1-102011 101 709
- DE-A1-102012 002 303
- DE-A1-102014 118 957
- DE-A1-102015 204 591

## Description

### Technical Field

The invention relates to a driving assistant system, especially relates to an advanced driving assistant system and its control assembly.

### Technical Background

At present, the automatic control driving technologies of cars have been developed constantly. The cars manufactured by many car manufacturers are equipped with an advanced driver assistance system (ADAS). ADAS is an active safety technology, which collects the data of the environment inside and outside the car in real time with a variety of sensors installed on the car for identification of stationary and moving objects, detection and tracking, thus allowing the drivers to perceive the possible hazards that may occur as soon as possible, drawing their attention and improving the security. The control assembly of ADAS directly influences user experiences.

In the design developed with the current technology, ADAS includes fatigue detection modules, car-following assistant modules, active lane change assistant modules and other control modules, and allows the user to activate fatigue detection by touching the button on the steering wheel. Although it is unnecessary to shake the steering wheel, the user still needs to activate the button on the steering wheel frequently when the car is in a cruise mode for a long time, thus affecting the user's comfort of using ADAS.

Additionally, in ADAS of cars from some manufacturers, the activation mechanisms of some control modules (e.g. the fatigue detection module) are set on the steering wheel. The user needs to shake the steering wheel for fatigue detection, and to complete functional settings of ADAS through operations of buttons on the steering wheel. Such solution has obvious potential dangers. Particularly, the interaction behaviour of steering wheel shaking is liable to affect the driving security in case of the violent shaking. Furthermore, the arrangement of too many buttons on the steering wheel can cause disoperation easily and even impedes the user's willingness of using ADAS.

The study on user experiences of using ADAS in the automatic drive at levels of L1-L3 shows, when at the automatic driving monitoring state at L2 (with lane keeping and automatic following activated, the user's feet taken away from the brake pedal and the accelerator pedal. The user's hands can be taken away from the steering wheel, but he/she must keep looking ahead), the system still requires the user to complete settings of driving performances and to activate fatigue detection. From the view of user experiences, such interaction causes significant inconvenience to the user.

DE 10 2011 101 709 A1 discloses a system for automatic vehicle control. The system has a control means for automatic control of a motor vehicle and an operating unit for inputting information into the control means. The operating unit is movable in two degrees of freedom for inputting information into the control means. The operating unit has an acknowledgement device for acknowledging an input request for checking a traffic perception of a vehicle driver.

DE 10 2015 204 591 A1 discloses a motor vehicle having a control device that has a first driving mode in which the control device independently performs longitudinal guidance and/or transverse guidance of the motor vehicle and an operating device that is designed to detect at least one operating action performed by a user of the motor vehicle by way of an operating object on a touch-sensitive input surface.

DE 10 2014 118 957 A1 discloses a method for operating a control arrangement for a motor vehicle, in which by means of a control element, which is arranged on a steering wheel of the motor vehicle and which has a touch-sensitive screen, a touch of at least one button displayed on the control element is detected as an operating action.

DE 10 2012 002 303 A1 discloses a driver assistance system that is switchable between a plurality of assistance modes that differ from one another in a degree of independence of the driver assistance system in driving the motor vehicle. The driver assistance system has a control device with a plurality of control elements. Each control element has a rest position in a non-actuated state. A shape of the control device is defined by the control elements in their rest positions.

### Description of Invention

The invention aims to overcome the defects of existing technologies, and to provide an advanced driving assistant system and control assemblies that can guarantee the operation security and improve user experiences.

The invention is a set out in the appended independent claims. Advantageous refinements are specified in the dependent claims.

According to the invention, a control assembly for an advanced driving assistant system of a car is provided, wherein the control assembly is a lever that is independently set in a vertical direction as a whole, wherein the lever includes a plurality of control modules for the advanced driving assistant system, wherein the plurality of control modules include: a speed limit adjustment module, which is configured to adjust a maximum speed limit at a state of adaptive cruise of car, a lane change indication module, which is configured to send a lane change indication for changing a lane, a vehicle distance adjustment module, which is configured to adjust a minimum distance to a car in front at the state of adaptive cruise of the car, and a fatigue detection activation module, which is configured to activate a fatigue detection for a driver of the car. The vehicle distance adjustment module includes a rotation sensing mechanism that generates control signals for increasing or decreasing the minimum distance to a car in front in accordance with a clockwise or anticlockwise rotation of the lever.

According to an embodiment, the speed limit adjustment module includes a forward and backward movement sensing mechanism, which is connected with a bottom of the lever and generates sensing signals corresponding to forward and backward push actions of the lever. The speed limit adjustment module is configured to generate control signal for increasing or decreasing the maximum speed limit in accordance with the sensing signals. According to an embodiment, the speed limit adjustment module is further configured to generate control signals that can make the vehicle maximum speed limit rise or drop by a large amount when the forward and backward movement sensing mechanism senses forward and backward push actions of the lever lasting for a long time, and to generate control signals that can make the vehicle maximum speed limit rise or drop by a small amount when the forward and backward movement sensing mechanism senses forward and backward push actions of the lever lasting for a short time.

According to an embodiment, the lane change indication module includes a leftward and rightward movement sensing mechanism, which is connected with a bottom of the lever and generates sensing signals corresponding to leftward and rightward push actions of the lever. The lane change indication module is configured to generate control signals for a lane change toward the left lane or the right lane at a suitable time in accordance with the sensing signals.

According to an embodiment, the fatigue detection activation module includes a touch sensing mechanism, which is configured to activate a car driver fatigue detection when the touch sensing mechanism detects a touch action.

According to an embodiment, the touch sensing mechanism is set on the lever. According to an embodiment, the control assembly is located on a central console of the car for convenience of operation. The control assembly is preferably located at a position close to armrest on the central console of the car.

According to the invention, an advanced driving assistant system is provided, which includes a control assembly according to the invention or any one of the embodiments of the above, a sensor module, which is configured to detect states of a driver, the car, and/or other cars, and a control module, which is configured to receive control signals transmitted by the control assembly and to receive sensor data detected by the sensor module and to carry out corresponding driving assistant control operations based on the control signals and the sensor data.

According to the advanced driving assistant system and its control assembly in the invention, the control assembly that is independently set as a lever in the vertical direction as a whole allows the user to operate and control the control modules of ADAS easily and conveniently, thus not only ensuring the operation security but also significantly improving the users' operation experiences.

### Description of Drawings

Figure 1 shows a block diagram of the advanced driving assistant system and its control assembly according to an embodiment of the invention;
Figure 2 shows an outline drawing of the control assembly used for the ADAS according to an embodiment of the invention; and
Figure 3 is a top view of the control assembly 10 in Figure 2.

### Detailed Description

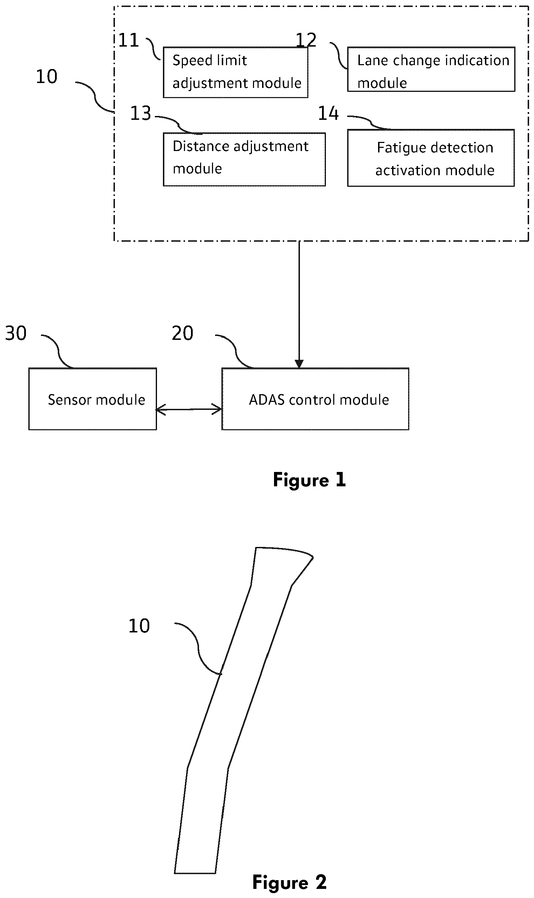

Figure 1 shows a block diagram of an advanced driving assistant system (ADAS) and its control assembly according to an embodiment of the invention. ADAS in Figure 1 includes the control assembly 10, an ADAS control module 20 and a sensor module 30. The control assembly 10 includes a speed limit adjustment module 11, a lane change indication module 12, a distance adjustment module 13, and a fatigue detection activation module 14. The sensor module 30 includes a plurality of sensors, e.g. a camera, a radar sensor, a laser and ultrasonic sensors, which can detect light, heat, pressure or other variables for monitoring of a car state (e.g. the car speed), a driver's state, a distance to other cars and speeds of other cars. These sensors are usually located on front/rear bumpers, exterior review mirrors or a windshield, or inside a shift lever. ADAS control module 20 can receive control signals sent from the modules 11-14 in the control assembly 10 and sensor data detected by the sensors in the sensor module 30, and implement the corresponding driving assistant control operations according to the control signals and the sensor data, including vehicle speed limit control, control of the car for lane change toward the left or right lane, adjustment of distance to the car in front, and fatigue detection for the driver.

Figure 2 shows an outline drawing of the control assembly 10 according to an embodiment of the invention. As shown in Figure 2, the control assembly 10 is a lever that is independently set in a vertical direction as a whole. It not only facilitates operation of ADAS by the user, but also can avoid disoperation caused by unexpected touching of another control assembly (e.g. the steering wheel). The lever can include at least a forward and backward movement sensing mechanism in the speed limit adjustment module 11, a left and right movement sensing mechanism in the lane change indication module 12, a rotation sensing mechanism in the distance adjustment module 13, and a touching sensing mechanism in the fatigue detection activation module 14. For example, the forward and backward movement sensing mechanism in the speed limit adjustment module 11 and the left and right movement sensing mechanism in the lane change indication module 12 can be arranged at the bottom of the lever, and the rotation sensing mechanism in the distance adjustment module 13 and the touch sensing mechanism in the fatigue detection activation module 14 can be arranged in the upper part or at the top of the lever. The circuit part (i.e. where the control signals are generated) of the speed limit adjustment module 11, the lane change indication module 12, the distance adjustment module 13 and the fatigue detection activation module 14 can be arranged outside the lever. After a corresponding sensing mechanism senses a control action of the lever, the corresponding circuit will generate control signals accordingly and transmit them to the control module 20 of ADAS. The control module 20 implements the corresponding driving assistant control operations according to the received control signals and the sensor data transmitted from the sensor module.

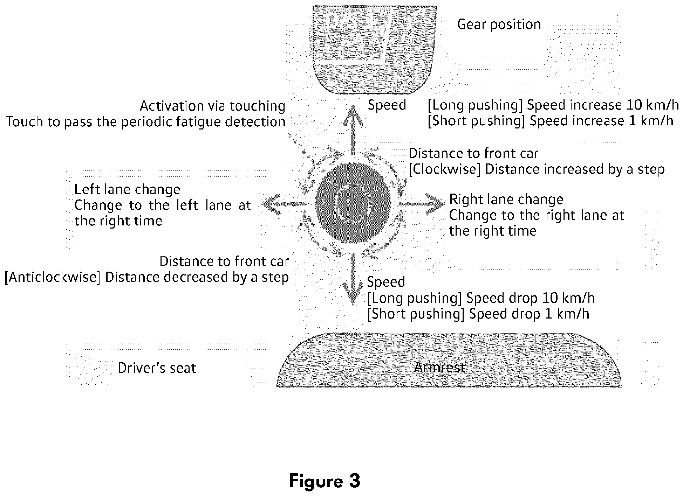

Figure 3 shows a top view of the control assembly 10 as shown in Figure 2, i.e. the circular portion at the centre of the drawing. The surrounding arrows and explanatory notes are used for indicating the direction of the lever operated by the user and describing the corresponding control function. The small circle at the centre of the circular portion (indicated by the dotted line) indicates a touch button for activating fatigue detection. It shows that the control assembly 10 can be located on the central console of the car for convenience of operation, e.g. at a location between the gears (upper part shown in the diagram) and a driver's armrest (lower part shown in the diagram), which is close to the front part of the right armrest pad of the driver. Preferably, the control assembly 10 is located at a position close to the armrest of the central console in the car, for operation convenience. After the user activates ADAS (including the adaptive cruise control (ACC) and the automatic lane keeping assistant (LKA)), ADAS will take over driving, and the user switches his/her own task into a monitoring state. In the monitoring state, the user can increase or decrease the maximum speed limit of ACC by pushing the control assembly 10 beside the right armrest pad of the driver forward or backward. The user can push the control assembly 10 to the left or the right to indicate a lane change request to the ADAS, and ADAS will decide the best lane change timing and control the automatic lane change operations based on the surrounding conditions detected by the sensor module 30. The user can control the minimum distance to the car in front when ACC is active by turning the control assembly 10 clockwise or anticlockwise. Meanwhile, ADAS performs fatigue detection regularly when ACC is active. The user only needs to gently touch the detection button (indicated by the dotted line as shown in Figure 3) on top of the control assembly 10 to activate fatigue detection for the driver.

The study on the user's state after activation of ADAS shows that the user enters a relaxing state naturally, with hands away from the steering wheel, the foot away from the accelerator pedal or the brake pedal, and the arm resting on the armrest pad naturally especially when driving on the expressway, which means the user is not inconvenienced to interact with the front operation area again. In the embodiment of the invention, for the state change of the user in such case, the ADAS control function module is integrated in the lever and arranged in a region that is easily accessible to the right hand, thus allowing the user to effectively control the automatic driving state at the relaxing state. For example, the user can change the maximum upper speed limit, the distance to the car in front and make a lane change simply by pushing the lever forward or backward (indicated by the upward and downward arrows in Figure 3), rightward or leftward (indicated by the leftward and rightward arrows in Figure 3), and turning the knob clockwise or anticlockwise (indicated by the curved arrows in Figure 3). Hence, interaction between the user and the system/machine is optimized, and more comfortable and relaxing experiences are brought to the user with ADAS active in the long distance trip.

For adjustment to the expected speed limit quickly during speed limit adjustment, the speed limit module 11 can be further configured to generate control signals, which allow for a speed increase of 10 km/h or a speed drop of 10 km/h for the maximum speed limit, when the forward and backward movement sensing mechanism detects a long lasting forward or backward pushing of the lever, and to generate control signals, which allow for a speed increase of 1 km/h or a speed drop of 1 km/h for the maximum speed limit, when the forward and backward movement sensing mechanism detects a short lasting forward or backward pushing of the lever.

The vehicle distance adjustment module 13 can be set to generate a control signal for enlarging the distance to the front car by a step (e.g. the step value of 2 m or 5 m) when the rotation sensing mechanism detects that the lever is rotated clockwise, and to generate a control signal for decreasing the distance to the front car by a step when the rotation sensing mechanism detects that the lever is rotated anticlockwise. The user can control the distance to the front car within a proper range by rotating the lever for proper times based on such as the car speed, the road or the weather conditions.

## Claims

1. A control assembly (10) for an advanced driving assistant system of a car, wherein the control assembly (10) is a lever that is independently set in a vertical direction as a whole, wherein the lever includes a plurality of control modules (11-14) for the advanced driving assistant system, wherein the plurality of control modules (11-14) include:
a speed limit adjustment module (11), which is configured to adjust a maximum speed limit at a state of adaptive cruise of the car;
a lane change indication module (12), which is configured to send a lane change indication for changing a lane;
a vehicle distance adjustment module (13), which is configured to adjust a minimum distance to a car in front at the state of adaptive cruise of the car; and
a fatigue detection activation module (14), which is configured to activate fatigue detection for a driver of the car;
**characterized in that** the vehicle distance adjustment module (13) includes a rotation sensing mechanism that generates control signals for increasing or decreasing the minimum distance to a car in front in accordance with a clockwise or anticlockwise rotation of the lever.

2. The control assembly (10) according to claim 1, wherein the speed limit adjustment module (11) includes a forward and backward movement sensing mechanism, which is connected with a bottom of the lever and generates sensing signals corresponding to forward and backward push actions of the lever and wherein the speed limit adjustment module (11) is configured to generate control signals for increasing or decreasing the maximum speed limit in accordance with the sensing signals.

3. The control assembly (10) according to claim 2, wherein the speed limit adjustment module (11) is further configured to generate control signals that can make the vehicle maximum speed limit rise or drop by a large amount when the forward and backward movement sensing mechanism senses forward and backward push actions of the lever lasting for a long time, and to generate control signals that can make the vehicle maximum speed limit rise or drop by a small amount when the forward and backward movement sensing mechanism senses forward and backward push actions of the lever lasting for a short time.

4. The control assembly (10) according to claim 1, wherein the lane change indication module (12) includes a leftward and rightward movement sensing mechanism, which is connected with a bottom of the lever and generates sensing signals corresponding to leftward and rightward push actions of the lever and wherein the lane change indication module (12) is configured to generate control signals for a lane change toward the left lane or the right lane at a suitable time in accordance with the sensing signals.

5. The control assembly (10) according to claim 1, wherein the fatigue detection activation module (14) includes a touch sensing mechanism, which is configured to activate a car driver fatigue detection when the touch sensing mechanism detects a touch action.

6. The control assembly (10) according to claim 5, wherein the touch sensing mechanism is set on the lever.

7. The control assembly (10) according to any one of the preceding claims, wherein the control assembly is located on a central console of the car.

8. The control assembly (10) according to claim 7, wherein the control assembly is located at a position close to an armrest on the central console of the car.

9. An advanced driving assistant system, including:
a control assembly (10) according to any one of claims 1 to 8;
a sensor module (30), which is configured to detect states of a driver, the car, and/or other cars; and
a control module (20), which is configured to receive control signals transmitted by the control assembly (10) and to receive sensor data detected by the sensor module (30) and to carry out corresponding driving assistant control operations based on the control signals and the sensor data.

## Patentansprüche

1. Steueranordnung (10) für ein fortschrittliches Fahrassistenzsystem eines Kraftfahrzeugs, wobei die Steueranordnung (10) ein Hebel ist, der in einer vertikalen Richtung als ein Ganzes unabhängig eingestellt wird, wobei der Hebel eine Mehrzahl von Steuermodulen (11-14) für das fortschrittliche Fahrassistenzsystem umfasst, wobei die Mehrzahl von Steuermodulen (11-14) Folgendes umfasst:
ein Geschwindigkeitsbegrenzungsanpassungsmodul (11), das dazu ausgelegt ist, eine Höchstgeschwindigkeitsbegrenzung in einem Zustand einer adaptiven Geschwindigkeitsregelung des Kraftfahrzeugs anzupassen;
ein Spurwechselanzeigemodul (12), das dazu ausgelegt ist, eine Spurwechselanzeige zum Wechseln einer Spur zu senden;
ein Fahrzeugabstandsanpassungsmodul (13), das dazu ausgelegt ist, einen Mindestabstand zu einem vorausfahrenden Kraftfahrzeug in einem Zustand einer adaptiven Geschwindigkeitsregelung des Kraftfahrzeugs anzupassen; und
ein Ermüdungsdetektionsaktivierungsmodul (14), das dazu ausgelegt ist, eine Ermüdungsdetektion für einen Fahrer des Kraftfahrzeugs zu aktivieren;
**dadurch gekennzeichnet, dass** das Fahrzeugabstandsanpassungsmodul (13) einen Drehungserfassungsmechanismus umfasst, der Steuersignale zum Erhöhen oder Verringern des Mindestabstands zu einem vorausfahrenden Kraftfahrzeug gemäß einer Drehung des Hebels im Uhrzeigersinn oder gegen den Uhrzeigersinn erzeugt.

2. Steueranordnung (10) nach Anspruch 1, wobei das Geschwindigkeitsbegrenzungsanpassungsmodul (11) einen Vorwärts- und Rückwärtsbewegungserfassungsmechanismus umfasst, der mit einer Unterseite des Hebels verbunden ist und Erfassungssignale erzeugt, die Vorwärts- und Rückwärtsschiebeaktionen des Hebels entsprechen, und wobei das Geschwindigkeitsbegrenzungsanpassungsmodul (11) dazu ausgelegt ist, Steuersignale zum Erhöhen oder Verringern der Höchstgeschwindigkeitsbegrenzung gemäß den Erfassungssignalen zu erzeugen.

3. Steueranordnung (10) nach Anspruch 2, wobei das Geschwindigkeitsbegrenzungsanpassungsmodul (11) ferner dazu ausgelegt ist, Steuersignale zu erzeugen, die ein Ansteigen oder Abfallen der Fahrzeughöchstgeschwindigkeitsbegrenzung um einen großen Betrag bewirken können, wenn der Vorwärts- und Rückwärtsbewegungserfassungsmechanismus Vorwärts- und Rückwärtsschiebeaktionen des Hebels, die eine längere Zeit dauern, erfasst, und Steuersignale zu erzeugen, die ein Ansteigen oder Abfallen der Fahrzeughöchstgeschwindigkeitsbegrenzung um einen kleinen Betrag bewirken können, wenn der Vorwärts- und Rückwärtsbewegungserfassungsmechanismus Vorwärts- und Rückwärtsschiebeaktionen des Hebels, die eine kurze Zeit dauern, erfasst.

4. Steueranordnung (10) nach Anspruch 1, wobei das Spurwechselanzeigemodul (12) einen Links- und Rechtsbewegungserfassungsmechanismus umfasst, der mit einer Unterseite des Hebels verbunden ist und Erfassungssignale erzeugt, die Schiebeaktionen des Hebels nach links und rechts entsprechen, und wobei das Spurwechselanzeigemodul (12) dazu ausgelegt ist, Steuersignale für einen Spurwechsel zur linken Spur oder zur rechten Spur zu einer geeigneten Zeit gemäß den Erfassungssignalen zu erzeugen.

5. Steueranordnung (10) nach Anspruch 1, wobei das Ermüdungsdetektionsaktivierungsmodul (14) einen Berührungserfassungsmechanismus umfasst, der dazu ausgelegt ist, eine Kraftfahrzeugfahrerermüdungsdetektion zu aktivieren, wenn der Berührungserfassungsmechanismus eine Berührungsaktion detektiert.

6. Steueranordnung (10) nach Anspruch 5, wobei der Berührungserfassungsmechanismus an dem Hebel eingestellt ist.

7. Steueranordnung (10) nach einem der vorhergehenden Ansprüche, wobei die Steueranordnung an einer Mittelkonsole des Kraftfahrzeugs angeordnet ist.

8. Steueranordnung (10) nach Anspruch 7, wobei die Steueranordnung an einer Position nahe zu einer Armlehne an der Mittelkonsole des Kraftfahrzeugs angeordnet ist.

9. Fortschrittliches Fahrassistenzsystem, umfassend:
eine Steueranordnung (10) nach einem der Ansprüche 1 bis 8;
ein Sensormodul (30), das dazu ausgelegt ist, Zustände eines Fahrers, des Kraftfahrzeugs und/oder anderer Kraftfahrzeuge zu detektieren; und
ein Steuermodul (20), das dazu ausgelegt ist, durch die Steueranordnung (10) übertragene Steuersignale zu empfangen und durch das Sensormodul (30) detektierte Sensordaten zu empfangen und entsprechende Fahrassistenzsteueroperationen basierend auf den Steuersignalen und den Sensordaten auszuführen.

## Revendications

1. Ensemble de commande (10) pour un système avancé d'aide à la conduite d'une voiture, dans lequel l'ensemble de commande (10) est un levier qui est réglé indépendamment dans une direction verticale dans son ensemble, dans lequel le levier comprend une pluralité de modules de commande (11-14) destinés au système avancé d'aide à la conduite, dans lequel la pluralité de modules de commande (11-14) comprend :
un module de réglage de limite de vitesse (11), qui est configuré pour régler une limite de vitesse maximale à un état de vitesse adaptative de la voiture ;
un module d'indication de changement de voie (12), qui est configuré pour envoyer une indication de changement de voie pour changer de voie ;
un module de réglage de distance de véhicule (13), qui est configuré pour régler une distance minimale à une voiture à l'avant à l'état de vitesse adaptative de la voiture ; et
un module d'activation de détection de fatigue (14), qui est configuré pour activer une détection de fatigue d'un conducteur de la voiture ;
**caractérisé en ce que** le module de réglage de distance (13) comprend un mécanisme de détection de rotation qui génère des signaux de commande pour augmenter ou diminuer la distance minimale à une voiture à l'avant en fonction d'une rotation du levier dans le sens horaire ou antihoraire.

2. Ensemble de commande (10) selon la revendication 1, dans lequel le module de réglage de limite de vitesse (11) comprend un mécanisme de détection de mouvement avant et arrière, qui est relié à un côté inférieur du levier et génère des signaux de détection correspondant à des actions de poussée avant et arrière du levier et dans lequel le module de réglage de limite de vitesse (11) est configuré pour générer des signaux de commande pour augmenter ou diminuer la limite de vitesse maximale en fonction des signaux de détection.

3. Ensemble de commande (10) selon la revendication 2, dans lequel le module de réglage de limite de vitesse (11) est en outre configuré pour générer des signaux de commande qui peuvent faire augmenter ou diminuer la limite de vitesse maximale d'une grande quantité lorsque le mécanisme de détection de mouvement avant et arrière détecte des actions de poussée avant et arrière du levier qui durent longtemps, et pour générer des signaux de commande qui peuvent faire augmenter ou diminuer la limite de vitesse maximale d'une petite quantité lorsque le mécanisme de détection de mouvement avant et arrière détecte des actions de poussée avant et arrière du levier qui durent peu de temps.

4. Ensemble de commande (10) selon la revendication 1, dans lequel le module d'indication de changement de voie (12) comprend un mécanisme de détection de mouvement vers la gauche et vers la droite, qui est relié à un côté inférieur du levier et génère des signaux de détection correspondant à des actions de poussée vers la gauche et vers la droite du levier et dans lequel le module d'indication de changement de voie (12) est configuré pour générer des signaux de commande pour un changement de voie vers la voie de gauche ou la voie de droite à un moment adapté en fonction des signaux de détection.

5. Ensemble de commande (10) selon la revendication 1, dans lequel le module d'activation de détection de fatigue (14) comprend un mécanisme de détection tactile, qui est configuré pour activer une détection de fatigue d'un conducteur de la voiture lorsque le mécanisme de détection tactile détecte une action de toucher.

6. Ensemble de commande (10) selon la revendication 5, dans lequel le mécanisme de détection tactile est placé sur le levier.

7. Ensemble de commande (10) selon l'une quelconque des revendications précédentes, dans lequel l'ensemble de commande est situé sur une console centrale de la voiture.

8. Ensemble de commande (10) selon la revendication 7, dans lequel l'ensemble de commande est situé à une position proche d'un accoudoir de la console centrale de la voiture.

9. Système avancé d'aide à la conduite, comprenant :
un ensemble de commande (10) selon l'une quelconque des revendications 1 à 8 ;
un module de détection (30), qui est configuré pour détecter des états d'un conducteur, de la voiture et/ou d'autres voitures ; et
un module de commande (20), qui est configuré pour recevoir des signaux de commande transmis par l'ensemble de commande (10) et pour recevoir des données de détection détectées par le module de détection (30) et pour exécuter des opérations correspondantes de commande d'aide à la conduite sur la base des signaux de commande et des données de détection.
